Europäisches Patentamt

European Patent Office

Office européen des brevets

(11) Numéro de publication: **0 256 193**
**A1**

## (12) DEMANDE DE BREVET EUROPEEN

(21) Numéro de dépôt: 86401779.3

(51) Int. Cl.⁴: **B65G 47/82**

(22) Date de dépôt: 08.08.86

(43) Date de publication de la demande:
24.02.88 Bulletin 88/08

(84) Etats contractants désignés:
DE GB IT

(71) Demandeur: **Société Française d'Automation Photographique**
**10, rue des Fermettes**
**F-78420 Carrières sur Seine (Yvelines)(FR)**

(72) Inventeur: **Chevallier, Bernard**
**16, passage de la Courbe**
**F-78420 Carrieres Sur Seine(FR)**

(74) Mandataire: **Chevallier, Robert Marie Georges et al**
**Cabinet BOETTCHER 23, rue La Boétie**
**F-75008 Paris(FR)**

(54) Machine pour le tri automatique d'objets selon leurs destinations.

(57) A des postes de tri successifs un transporteur (12) d'objets à trier passe entre deux parois espacées (12A, 12B) guidées transversalement par des glissières (7,8,9...) et traversées par des tiges de manoeuvre (15,16) à mouvements alternatifs continus qui sont verrouillées sélectivement et momentanément avec les parois (12A, 12B) sous la commande d'un moyen de lecture (31) afin d'entraîner l'objet d'un côté ou de l'autre du transporteur (2) en fonction de la destination de cet objet.

Fig:1

EP 0 256 193 A1

# Machine pour le tri automatique d'objets selon leurs destinations

L'invention a pour objet une machine capable de trier automatiquement en fonction de diverses destinations des objets qui se succèdent sur un transporteur qui les entraîne en file continue.

La machine de l'invention est particulièrement appropriée au tri d'objets ayant une certaine masse (par opposition au courrier postal ordinaire où de nombreux objets ont une masse ne dépassant pas 20 g) et ayant un encombrement marqué en hauteur. L'invention concerne particulièrement mais non exclusivement les pochettes connues d'expédition de travaux photographiques à partir de laboratoires photographiques où ont été exécutées des opérations de développement, de tirage, d'agrandissement, etc...

Par extension, la machine de l'invention est capable de trier tous objets analogues à des pochettes, tels que des sacs ou des sachets, ou tels que des paquets qui ont une dimension développée en sens vertical.

En général une machine de tri comprend un transporteur ayant une face supérieure avec des emplacements successifs définis pour supporter des objets à trier portant un code d'identification de leurs destinations respectives, des postes de triage se succédant disposés sur le chemin du transporteur, des moyens d'éjection installés à chaque poste de triage pour évacuer les objets du transporteur, un moyen de lecture du code d'identification porté par les objets placé en amont des postes de triage et commandant les moyens d'éjection. Selon l'invention, à chaque poste de triage, les moyens d'éjection comprennent une paire de parois dressées s'étendant vers le haut à partir du niveau de la face supérieure du transporteur, des moyens de manoeuvre traversant librement lesdites parois transversalement au transporteur et animés de mouvements alternatifs continus, des moyens complémentaires de verrouillage fixés sur les parois et sur les moyens de manoeuvre et commandés par le moyen de lecture pour réunir sélectivement ces moyens de manoeuvre et ces parois afin de déplacer celles-ci en sens transversal au transporteur entre deux positions au moins et de préférence entre trois positons dstinctes. A une première position, les deux parois de chaque paire se trouvent respectivement sur les deux côtés longitudinaux opposés du transporteur; à la deuxième et éventuellement à la troisième position, les deux parois de chaque paire sont déportées sur un même côté, et sur le côté opposé du transporteur.

Chaque paire de parois présente des ouvertures situées en correspondance d'une paroi à l'autre d'une paire et les moyens de manoeuvre comprennent au moins une tige de manoeuvre qui s'étend librement à travers ces ouvertures transversalement au transporteur; des moyens complémentaires de verrouillage sont prévus sur chaque paire de parois et sur chaque tige de manoeuvre pour réaliser sélectivement un accouplement momentané de cette paire et de cette tige sous la commande des moyens de lecture.

De préférence, les moyens complémentaires de verrouillage comprennent d'une part un doigt de verrouillage, d'autre part un logement de réception de ce doigt; chaque doigt est avantageusement monté sur une paroi et guidé pour être déplaçable transversalement à la tige de manoeuvre entre une position de verrouillage et une position de repos.

Une même tige de manoeuvre peut être entraînée en déplacements alternatifs transversalement au transporteur par un moteur individuel et peut servir à déplacer la paire de parois correspondante entre les trois positions possibles de celle-ci.

Dans un mode de réalisation préféré de l'invention, les paires de parois sont déplaçables entre trois positions et il existe en relation avec chaque paire deux tiges de manoeuvre qui traversent librement cette paire, chaque tige étant destinée à déplacer respectivement ladite paire entre sa première position et sa deuxième et entre sa première position et sa troisième position; des moyens de verrouillage sont prévus sur chaque paroi en correspondance avec l'une et avec l'autre tige de manoeuvre.

Avantageusement, les deux tiges de manoeuvre sont placées sur les deux côtés opposés de chaque paire et toutes les tiges situées d'un même côté sont articulées avec une barre commune de commande.

On donnera maintenant, sans intention limitative et sans exclure aucune variante, une description d'un exemple préféré de réalisation. On se reportera aux dessins annexés dans lesquels :

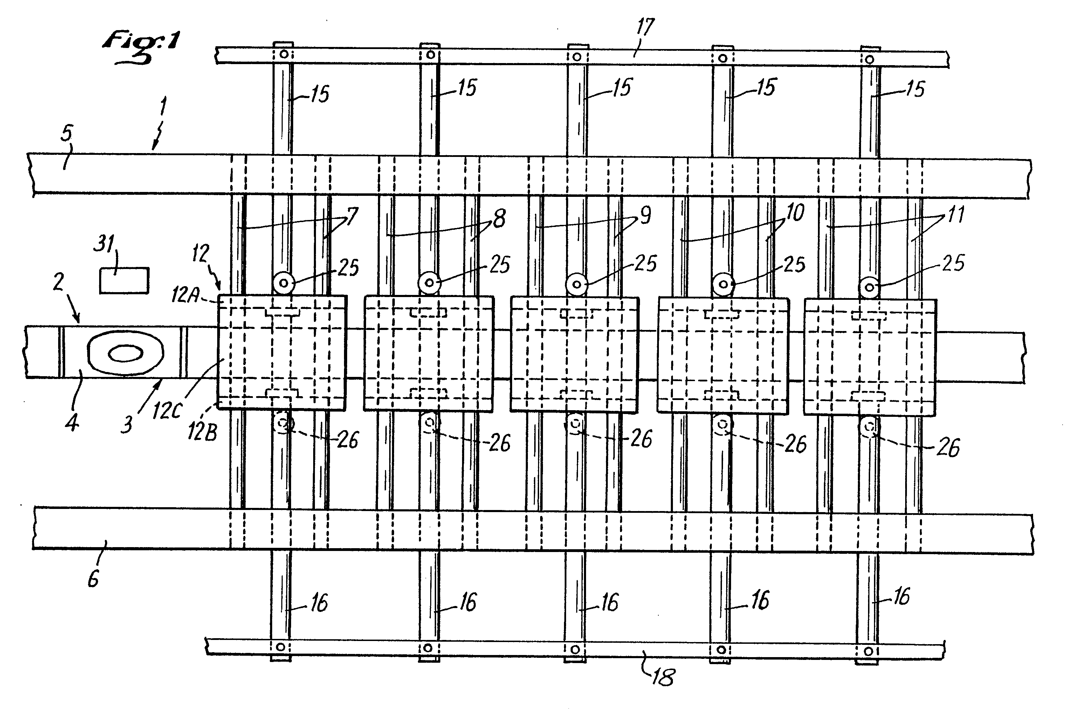

-la figure 1 est une vue générale - schématique de dessus d'une machine de tri conforme à l'invention,

-la figure 2 est une vue en coupe transversale de la machine de la figure 1, avec une paire de parois représentée à sa première position,

-la figure 3 est une vue analogue à celle de la figure 2 montrant une paire de parois à une deuxième position, en trait plein et à une troisième position en trait mixte.

Une machine selon l'invention comprend un bâti 1 qui supporte un transporteur 2, rectiligne, d'un type quelconque convenable, par exemple à palettes, ayant une face supérieure 3 se déplaçant dans un plan horizontal, sur laquelle sont limités, de préférence, des emplacements déterminés 4 espacés d'un pas constant. Le bâti 1 a deux parois principa les 5,6 parallèles, espacées, qui contiennent entre elles le transporteur 2. Entre ces deux parois principales 5,6 s'étendent des glissières de guidage 7,8,9,10,11, etc.. placées transversalement au transporteur 2. Ces glissières peuvent être constituées par deux simples barres cylindriques espacées dans le sens de marche du transporteur 2, encastrées par leurs parties extrêmes opposées dans les parois 5,6. Ces ensembles 7,8,9... de guidage se succèdent dans le sens de marche du transporteur 2 de préférence avec un pas constant égal à celui des emplacements 4 sur le transporteur 2. Chaque ensemble de deux glissières de guidage 7,8,9... matérialise un poste de tr où est installé un moyen d'éjection 12.

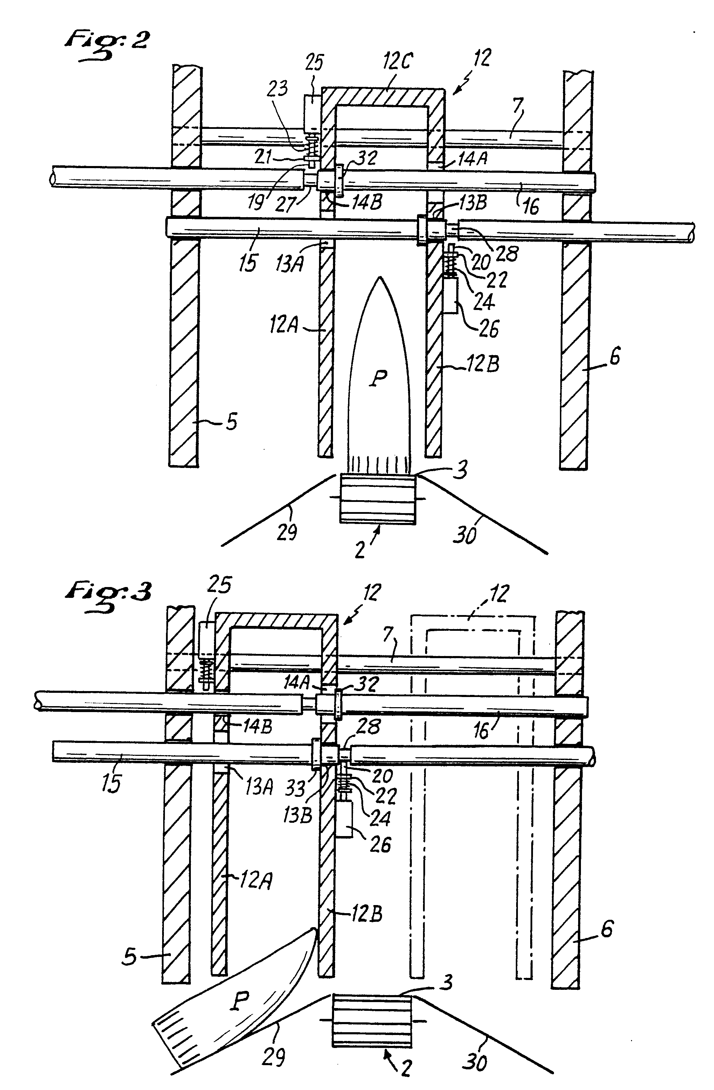

Chaque moyen d'éjection 12 comprend deux parois 12A, 12B, parallèles, dressées, s'étendant vers le haut à partir du niveau de la face supérieure 3 du transporteur 2; ces parois 12A, 12B sont suspendues aux glissières de guidage 7, 8,9 ... le long desquelles elles peuvent coulisser. Ces mêmes parois 12A, 12B sont, de préférence réunies l'une à l'autre par une paroi supérieure 12C qui est située au-dessus du transporteur 2 et des glissières de guidage. De cette façon, chaque moyen d'éjection a une configuration générale en M ouverte vers le bas. Les deux parois 12A, 12B sont écartées d'une distance égale ou faiblement supérieure à la largeur du transporteur 2. En fait la distance entre les parois 12A, 12B est en relation avec la largeur des objets ou paquets P qui sont déplacés par le transporteur 2 pour être triés. Chaque moyen d'éjection peut occuper une première position, visible sur la figure 2, où les parois 12A, 12B contiennent entre elles les objets P qui sont déplacés. Ainsi, des objets de taille élevée en comparaison de leur base peuvent être entraînés par le transporteur 2 sans risque de chute puisqu'ils sont retenus sur les côtés longitudinaux du transporteur par les parois 12A, 12B.

Dans les deux parois 12A, 12B de chaque moyen d'éjection 12 sont ménagées, en correspondance d'une paroi à l'autre des ouvertures 13A, 13B d'une part, 14A, 14B d'autre part, de préférence en dessous des glissières de guidage 7,8,9... et au-dessus du volume réservé au passage des objets transportés P.

Dans ces ouvertures 13A, 13B et 14A, 14B passe respectivement une tige de manoeuvre 15,16. Chaque tige 15, 16 est montée coulissante au moins dans l'une des parois principales 5,6 du bâti 1. Pour obtenir un meilleur guidage, on peut prévoir que chaque tige de manoeuvre 15,16 est disposée transversalement au transporteur 2 et traverse les deux parois principales 5,6 par lesquelles elle est guidée en translation longitudinale en passant librement dans les ouvertures correspondantes 13A, 13B ou 14A, 14B des parois 12A, 12B.

Sur un côté du transporteur 2, les tiges de manoeuvre 15 s'étendent suffisamment à l'extérieur de la paroi principale 5 pour être articulées avec une barre de commande 17 réunie à un moteur (non représenté) qui leur impose des mouvements alternatifs continus à travers les moyens d'éjection 12. Sur l'autre côté du transporteur 2, ce sont les tiges de manoeuvre 16 qui sont articulées avec une barre de commande 18 qui leur impose aussi des mouvements alternatifs.

Sur les faces latérales extérieures opposées de chaque moyen d'éjection 12 sont montés des doigts de verrouillage 19, 20 dirigés respectivement vers une tige de manoeuvre correspondante 15, 16. Chaque doigt 19, 20 est guidé en coulissement dans une oreille 21,22 qui fait corps avec une paroi 12A, 12B et il est commandé contre la force d'un ressort de rappel 23, 24 par un organe moteur 25, 26 convenable tel qu'un vérin ou un solénoïde. Sur chaque tige de manoeuvre 15, 16 est prévue une réduction de grosseur qui constitue un logement de réception 27, 28 du doigt de verrouillage 19, 20 correspondant.

Dans le présent exemple, la tige de manoeuvre 15 effectue des mouvements alternatifs grâce auxquels, quand le doigt de manoeuvre 20 est engagé dans le logement de réception correspondant 28, le moyen d'éjection 12 est déplacé entre sa première position décrite plus haut, visible sur la figure 2, et une deuxième position où il se trouve sur la figure 3, dans laquelle il est situé totalement sur un côté du transporteur 2, tout en restant entre les parois principales 5,6. Ces indications permettent de déterminer l'amplitude des mouvements alternatifs de la tige de manoeuvre 15. Ces mouvements sont exécutés continuellement même quand le doigt de manoeuvre 15 est tiré en dehors du logement de réception 28.

La tige de manoeuvre 16 est déplacée de la même façon symétriquement par rapport à un plan vertical passant par le milieu du transporteur 2. Cette tige 2 est capable de déplacer le moyen d'éjection 12 de chaque poste de tri entre la première position définie plus haut et une troisième position indiquée partiellement en trait mixte sur la figure 3, symétrique de la deuxième position sur le côté longitudinal opposé du transporteur 2, quand le doigt de manoeuvre 19 est engagé dans le logement de réception correspondant 27.

Quand un moyen d'éjection est déplacé vers sa deuxième ou sa troisième position à un poste de tri, il entraîne avec lui et il fait tomber du transporteur 2 l'objet P qui se trouvait à ce poste au début du déplacement, comme le montre la figure 3. Des plans inclinés s'étendent sur les deux côtés du transporteur 2 à partir du niveau de sa surface supérieure 3 pour diriger les objets P.

L'engagement des doigts de verrouillage 19, 20 dans le logement de réception correspondant 27, 28 d'une tige de manoeuvre 15 ou 16 se fait sous la commande d'un moyen de lecture 31 installé à proximité du transporteur 2, en amont du premier poste de tri. Ce moyen de lecture 31 lit sur chaque paquet P la destination inscrite sur ce dernier moyen d'un code quelconque approprié, par exemple un code à barres ou un code équivalent. L'information lue est transmise à un microprocesseur qui provoque l'engagement du doigt de verrouillage 19 ou 20 au poste de tri qui convient quand l'objet P arrive à ce poste après être passé aux postes qui précèdent.

Le doigt de verrouillage 19 ou 20 est dégagé du logement correspondant quand, pendant la poursuite de ses mouvements par la tige de manoeuvre 15 ou 16, celle-ci a remis le moyen d'éjection 12 considéré à sa première position, avant l'arrivée de l'objet P qui suit.

Chaque tige de manoeuvre 15, 16 est pourvue d'un collier 32, 33 respectivement qui se trouve entre les deux parois 12A, 12B, en appui contre la face intérieure d'une paroi 12A ou 12B quand le moyen d'éjection 12 occupe sa première position. L'appui du collier 32, 33 contre la paroi 12A, 12B a lieu dans le sens du retour du moyen d'éjection 12 à sa première position, les tiges de manoeuvre se déplaçant dans des sens opposés. A cet effet, l'ouverture correspondante 13B ou 14B dans la paroi 12 B ou 12 A a un diamètre inférieur à celui du collier 32 ou 33; cette situation correspond à un centrage correct du moyen d'éjection 12 à sa première position, par rapport au transporteur 2.

L'ouverture 13A ou 14A ménagée dans la paroi opposée 12A ou 12B a un diamètre supérieur à celui du collier 33 ou 32 correspondant pour que ce dernier puisse traverser librement cette paroi. Ces explications permettent de déterminer la distance qui sépare les deux parois principales 5,6 du bâti 1 ainsi que l'amplitude et la disposition des courses des tiges de manoeuvre 15,16. Ces dernières agissent chacune pour assurer les déplacements des moyens d'éjection 12 respectivement entre la première et la deuxième position et entre la première et la troisième position. Ces tiges se déplacent constamment simultanément et en sens opposés.

Dans une variante de réalisation, à chaque poste de tri, une unique tige de manoeuvre pourrait déplacer le moyen d'éjection correspondant entre ses trois positions. Mais dans ce cas, cette tige devrait être mue par un moteur individuel; il ne pourrait pas y avoir de barre de commande commune telle que les barres 17,18.

## Revendications

1. Machine de tri comprenant un transporteur (2) ayant une face supérieure (3) pour supporter des objets (P) à trier portant chacun un code d'identification de sa destination, des postes de tri se succédant le long du transporteur (2), des moyens d'éjection (12) installés à chaque poste de tri, un moyen de lecture (31) du code d'identification porté par chaque objet (P) commandant lesdits moyens d'éjection (12), caractérisée en ce que, à chaque poste de tri les moyens d'éjection (12) comprennent une paire de parois (12A, 12B) s'étendant vers le haut à partir du niveau de la face supérieure (3) du transporteur (2), cette paire de parois (12A, 12B) étant guidée pour être déplaçable en sens transversal au transporteur (2), des moyens de manoeuvre (15, 16) traversant librement lesdites parois (12A, 12B) transversalement au transporteur (2) et étant animés de mouvements alternatifs continus, des moyens complémentaires de verrouillage (20, 28; 19,27) fixés sur lesdites parois et sur les moyens de manoeuvre et commandés par le moyen de lecture (31) pour les réunir sélectivement afin de provoquer le déplacement desdites parois entre deux positions au moins comprenant une première position où les deux parois (12A, 12B) se trouvent respectivement sur les côtés longitudinaux opposés du transporteur (2) et une deuxième position où les deux parois (12A, 12B) se trouvent déportées sur un même côté du transporteur (2).

2. Machine selon la revendication 1, caractérisée en ce que, quand les parois (12A, 12B) d'une paire occupent leur première position, elles sont parallèles et séparées par une distance égale environ à la largeur du transporteur (2), en rapport avec la largeur des objets (P) à trier.

3. Machine selon la revendication 2, caractérisée en ce que les deux parois (12A, 12B) sont réunies par une paroi supérieure (12C) s'étendant au-dessus du transporteur (2).

4. Machine selon la revendication 1, caractérisée en ce qu'elle comprend un bâti (1) ayant deux parois principales espacées (5,6) entre lesquelles est situé le transporteur (2) et entre lesquelles s'étendent, en sens transversal à ce dernier, à chaque poste de tri, des glissières de guidage (7,8,9...) au moyen desquelles la paire de parois (12A, 12B) de ce poste de tri est suspendue et guidée en déplacement.

5. Machine selon la revendication 1, caractérisée en ce que le moyen d'éjection (12) comprend au moins une tige de manoeuvre (15 ou 16) s'étendant transversalement au transporteur (2), les parois (12A, 12B) présentent des ouvertures correspondantes (12A, 12B ou 13A, 13B) à travers lesquelles passe librement ladite tige de manoeuvre, et il existe sur une paroi (12A, 12B) au moins et sur ladite tige de manoeuvre (15 ou 16) des moyens complémentaires (20,28; 19, 27) de verrouillage commandés par le moyen de lecture (31).

6. Machine selon la revendication 1, caractérisée en ce que, à chaque poste de triage, chaque paire de parois (12A, 12B) est déplaçable entre trois positions comprenant ladite première position et une deuxième et une troisième position où ces deux parois (12A, 12B) sont déportées ensemble respectivement sur un côté et sur le côté opposé du transporteur (2).

7. Machine selon la revendication 6, caractérisée en ce que le moyen d'éjection comprend deux tiges de manoeuvre (15,16) s'étendant transversalement au transporteur (2), les parois (12A, 12B) présentant à l'usage de chaque tige (15,16) des ouvertures correspondantes (12A, 12B ou 13A, 13B) à travers lesquelles passe librement une tige correspondante, les deux tiges (15,16) étant guidées en coulissement en sens longitudinal et déplacees par des mouvements alternatifs continus, en correspondance pour une tige avec la première position et la deuxième position des parois (12A, 12B) et pour l'autre tige avec la première position et la troisième position, des moyens complémentaires de verrouillage (20,28; 19,27) commandés par le moyen de lecture (31) étant prévus sur lesdites parois (12A, 12B) et sur chaque tige de manoeuvre (15, 16).

8. Machine selon les revendications 5 ou 7, caractérisée en ce que les moyens complémentaires de verrouillage comprennent d'une part un doigt de verrouillage (19,20) monte de préférence sur une paroi (12A, 12B) et un logement de réception (27, 28) de ce doigt prévu de préférence sur la tige de manoeuvre (15, 16) correspondante.

9. Machine selon la revendication 7, caractérisée en ce que les tiges de manoeuvre (15) des moyens d'éjection (12) entre la première position et la deuxième position de ces moyens sont articulées avec une première barre de commande commune (17) et les tiges de manoeuvre (16) des moyens d'éjection (12) entre la première position et la troisième position de ces moyens sont articulées avec une seconde barre de commande commune (18).

10. Machine selon les revendications 7 ou 9, caractérisée en ce que, à chaque poste de tri, chaque tige de manoeuvre (15, 16) est pourvue d'un collier (32,33) qui est appliqué contre une face d'une paroi (12A, 12B) du moyen d'éjection (12) quand celui-ci est à sa première position et que ladite tige de manoeuvre (15, 16) arrive à la fin de sa course dans le sens du rappel à ladite première position, ce collier (32,33) ayant une grosseur supérieure à celle de l'ouverture (13B, 14B) ménagée dans ladite paroi et une grosseur inférieure à celle de l'ouverture (13A, 14A) ménagée dans la paroi opposée.

*Fig.1*

0 256 193

*Fig. 2*

*Fig. 3*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| E | FR-A-2 583 661 (SOC. FRANCAISE D'AUTOMATION PHOTOGRAPHIQUE) * En entier * | 1-10 | B 65 G 47/82 |
| A | FR-A-2 074 170 (TOKYO SHIBAURA ELECTRIC) | | |
| A | DE-A-2 038 620 (DEUTSCHE BUNDESPOST) * En entier * | 1 | |

|  | DOMAINES TECHNIQUES RECHERCHES (Int. Cl.4) |
|---|---|
|  | B 65 G B 07 C |

Le présent rapport de recherche a été établi pour toutes les revendications

| Lieu de la recherche | Date d'achèvement de la recherche | Examinateur |
|---|---|---|
| LA HAYE | 06-04-1987 | OSTYN T.J.M. |